# EUROPÄISCHE PATENTSCHRIFT

(11) **EP 2 171 582 B1**
(45) Veröffentlichungstag und Bekanntmachung des Hinweises auf die Patenterteilung: **02.08.2017**
(21) Anmeldenummer: 08748381.4
(22) Anmeldetag: 05.06.2008
(51) Int. Cl.: G06F 9/54, G06F 17/30, H04L 29/08

(54) **FERNBEDIENUNG EINES BROWSER-PROGRAMMS**
REMOTELY CONTROLLING A BROWSER PROGRAM
TÉLÉCOMMANDE DE PROGRAMME DE NAVIGATION

(30) Priorität: 08.06.2007 CH 911072007
(43) Veröffentlichungstag der Anmeldung: 07.04.2010
(73) Patentinhaber: unblu inc., 6060 Sarnen (CH)
(72) Erfinder: HALDIMANN, Luc, CH-4133 Pratteln (CH); BIERI, Philipp, CH-3800 Unterseen (CH); ANDEREGG, Simon, CH-3600 Thun (CH)
(74) Vertreter: Latscha Schöllhorn Partner AG
(86) Internationale Anmeldenummer: PCT/CH2008/000251
(87) Internationale Veröffentlichungsnummer: WO 2008/148238

(56) Entgegenhaltungen:
- EP-A- 1 022 664
- US-A1- 2006 015 763
- US-B1- 6 360 250
- US-B1- 7 149 776
- AOKI Y ED - INSTITUTE OF ELECTRICAL AND ELECTRONICS ENGINEERS: "Collaborative environment for supporting web users" 2001 IEEE INTERNATIONAL CONFERENCE ON SYSTEMS MAN AND CYBERNETICS. SMC 2001. TUCSON, AZ, OCT. 7 - 10, 2001, IEEE INTERNATIONAL CONFERENCE ON SYSTEMS, MAN AND CYBERNETICS, NEW YORK, NY : IEEE, US, Bd. VOL. 1 OF 5, 7. Oktober 2001 (2001-10-07), Seiten 2309-2316, XP010568765 ISBN: 0-7803-7087-2
- ANDRÉS FORTIER, JUAN CAPPI, GUSTAVO ROSSI: "Interception Patterns"[Online] 12. September 2003 (2003-09-12), Seiten 1-16, XP002500966 10th Conference on Pattern Languages of Programs 2003 Gefunden im Internet: URL:http://www.hillside.net/plop/plop2003/ Papers/Fortier-Interception.pdf> [gefunden am 2008-10-23]

## Beschreibung

### Technisches Gebiet

Die Erfindung betrifft ein Verfahren gemäss dem Oberbegriff des unabhängigen Patentanspruchs 1 sowie eine Kommunikationsvorrichtung zum Ausführen des erfindungsgemässen Verfahrens und ein Computerprogramm zum Ausführen des erfindungsgemässen Verfahrens.

Solche Verfahren, bei denen ein auf einem Quellcomputer ausgeführtes Browser-Programm ein Browser-Fenster erzeugt, in dem unter Einbezug der Ausgestaltung des Browser-Fensters Objekte strukturiert aufeinander abgestimmt dargestellt werden, und bei denen die im Browser-Fenster dargestellten Objekte simultan auf einen Zielcomputer übertragen werden und auf dem Zielcomputer dargestellt werden, können zur Fernbedienung des auf dem Quellcomputer ausgeführten Browser-Programms vom Zielcomputer aus eingesetzt werden.

### Stand der Technik

Zum Auffinden, Darstellen und Bearbeiten von Informationen auf einem Computer oder einem Verbund von Computern werden häufig Browser-Programme eingesetzt, die auf dem Computer ausgeführt werden und von einem Benutzer bedient werden. Die Informationen werden typischerweise von einem Server-Dienst bereitgestellt, der beispielsweise auf einem vom Computer örtlich getrennten, über ein Kommunikationsnetzwerk mit dem Computer verbundenen Server-Computer ausgeführt wird. Damit das Browser-Programm die Informationen in einer vordefinierten Weise darstellen und bearbeiten kann, werden die Informationen dazu in einem vordefinierten Format auf dem Server-Dienst bereitgestellt. Browser-Programme weisen üblicherweise ein Darstellungsmodul auf, wobei sie die Informationen entweder rein textlich im Darstellungsmodul wiedergeben oder grafisch aufbereitet.

Mit der Ausbreitung des Internets als weltweites Kommunikationsnetzwerk hat sich insbesondere auch das World Wide Web System (WWW) weltweit etabliert. Im WWW werden Informationen von Server-Computern über das Internet für andere an das Internet angeschlossene Computer bereitgestellt, wobei die Informationen dabei so standardisiert aufbereitet sind, dass sie von einem Browser-Programm, das auf einem an das Internet angeschlossenen Computer ausgeführt wird, dargestellt und bearbeitet werden können. Das Browser-Programm ist dazu so ausgestaltet, dass es die standardisiert aufbereiteten Information beziehen, darstellen und bearbeiten kann sowie gegebenenfalls Informationen an den Server-Computer zurücksenden kann. Beispielsweise haben sich im WWW unter anderem Standards bezüglich der Übertragungsprotokolle, wie zum Beispiel das Hypertext Transfer Protocol (HTTP) oder das File Transfer Protocol (FTP), der Auszeichnungssprachen, wie zum Beispiel die Hypertext Markup Language (HTML), und der Grafikformate, wie zum Beispiel das Format Joint Photographic Experts Group (JPG) oder das Format Graphics Interchange Format (GIF), etabliert. Browser-Programme sind für eine grosse Vielfalt von Plattformen von Computern, die jeweils von verschiedenen Parametern, wie beispielsweise dem Betriebssystem, der Hardware, der Versionierung etc., abhängig sind, verfügbar. Dabei sind sie für die im Wesentlichen gleichen Standards ausgestaltet, so dass die für das WWW standardisiert aufbereiteten Information im Wesentlichen plattformunabhängig bereitgestellt werden können.

Typischerweise sind im WWW bereitgestellte Informationen in aus verschiedenen Objekten zusammengesetzte Seiten organisiert, die mittels einer Auszeichnungssprache definiert und gegliedert sind. Ein wie oben beschriebenes Browser-Programm kann eine Interpretationseinheit aufweisen, mittels derer das Browser-Programm eine über das Netzwerk, zum Beispiel das Internet, bezogene Seite auswerten kann und unter anderem auch die mittels der Auszeichnungssprache definierten Objekte gegliedert im Darstellungsmodul wiedergeben kann. Um eine verbesserte Interaktion mit einem Benutzer des Browser-Programms zu ermöglichen und um seitenspezifische Programmlogik im Browser-Programm durchführen zu können, haben sich im WWW auch Standards zu Skript-Programmiersprachen, wie beispielsweise JavaScript, etabliert. Die Interpretationseinheit des Browser-Programm kann typischerweise eine solche Skriptsprache ebenfalls umsetzen.

Mit der zunehmenden Bedeutung des WWW und der zunehmenden Komplexität entsprechender Seiten ist auch die Wartung, Betreuung und Kontrolle der Seiten heute zunehmend wichtig. Um beispielsweise den Benutzer einer Seite möglichst effizient unterstützen und betreuen zu können oder auch zur Erledigung anderer Wartungs-, Betreuungs- und Kontrollaufgaben wird dazu heute unter anderem Fernbedienungssoftware eingesetzt, mit der das Browser-Programm eines Computers auf einem Kontrollcomputer dargestellt werden kann und mit dem Kontrollcomputer, beispielsweise über dessen Tastatur oder über dessen Maus, bedient werden kann. Mit solcher Fernbedienungssoftware kann zum Beispiel der Benutzer einer Seite auf seinem eigenen Computer geschult, betreut und unterstützt werden, ohne dass dazu eine betreuende Person physisch am Standort des Computers beim Benutzer der Seite anwesend sein muss.

Bekannte Fernbedienungssoftware erlaubt es von einem Kontrollcomputer aus die Kontrolle über einen Computer zu übernehmen. Dabei lassen sich dann typischerweise alle Aktionen auf dem Computer ausführen, die auch durch den Benutzer des Computers selbst ausführbar sind, was normalerweise erheblich über die Wartung, Betreuung und Kontrolle eines auf dem Computer ausgeführten Browser-Programms hinausgeht. Aus sicherheitstechnischen und anderen Gründen ist eine solche weitführende Kontrolle aber häufig unerwünscht oder nicht zulässig. Weiter muss bei bekannter Fernbedienungssoftware üblicherweise zumindest im Betriebssystem des Computers zumindest ein Teil der Fernbedienungssoftware installiert werden. Diese Installation von Software für die Fernbedienung einer Seite im Browser-Programm ist aber wiederum häufig unerwünscht und zu aufwändig. Auch muss die auf dem Computer zu installierende Fernbedienungssoftware für alle Plattformen von Computer angepasst ausgestaltet werden, die fernbedienbar sein sollen. Plattformabhängige Software ist aber üblicherweise mit einem grossen Aufwand bei der Entwicklung sowie der Wartung und Betreuung verbunden.

Weiter gibt es Fernbedienungssoftware für Browser-Programme, die nicht im Betriebssystem des Computers installiert werden, sondern als eingebettete Objekte zusammen mit einer Seite in das Browser-Programm übertragen werden. Solche eingebettete Objekte werden nicht vom Browser-Programm selbst interpretiert und/oder ausgeführt sondern von einem Drittprogramm, das über das Browser-Programm gestartet wird. Beispielsweise ist im Artikel "Collaborative Environment For Supporting Web Users" von Yoshinory Aoki der IBM Research, Tokyo Research Laboratory aus dem Jahr 2001 (ISBN 0-7803-7087-2) ein auf diese Weise implementiertes System beschrieben. Solche ebenfalls standardisierten Drittprogramme, wie beispielsweise die Java Runtime Engine (JRE) oder die ActiveX Komponenten, die ein im Wesentlichen plattformunabhängiges Ausführen von Programmen ermöglichen, müssen aber selbst wiederum im Betriebssystem des Computers installiert sein. Da aber die Installation von Drittprogrammen und insbesondere auch das Ausführen von eingebetteten Objekten mittels eines Drittprogramms teilweise sicherheitsrelevant sein kann, sind entsprechende eingebettete Objekte häufig unerwünscht und/oder unzulässig.

Bei den oben beschriebenen Arten von Fernbedienungssoftware werden üblicherweise Rasterbilder der Darstellung des grafischen Ausgabegeräts des Computer, wie beispielsweise ein Bildschirm, oder Teilen davon, wie beispielsweise ein Browser-Fenster eines Browser-Programms, auf den Kontrollcomputer übertragen und auf dem Kontrollcomputer dargestellt. Die Bedienung des Computers vom Kontrollcomputer aus erfolgt normalerweise über die Tastatur des Kontrollcomputers und grafisch über die Bewegung eines Zeigers, beispielsweise mittels einer Maus, über dem auf dem Kontrollcomputer dargestellten Rasterbild. Dazu werden Koordinaten des Rasterbilds mit Koordinaten der Darstellung des grafischen Ausgabegeräts in Verbindung gebracht, so dass eine Bewegung auf dem Rasterbild in eine Bewegung auf dem grafischen Ausgabegerät transformiert werden kann und allenfalls auch umgekehrt. Die so ähnlich einer fotografischen Darstellung des grafischen Ausgabegeräts erzeugten Rasterbilder können aber Schwierigkeiten bei der Darstellung und Bedienung mit sich bringen. So können beispielsweise die Auflösung und/oder die Grösse der Darstellung auf dem Computer und die Auflösung und/oder die Grösse der Darstellung auf dem Kontrollcomputer unterschiedlich sein, so dass Objekte, die in der Darstellung auf dem Computer strukturiert aufeinander abgestimmt dargestellt sind, in der Darstellung auf dem Kontrollcomputer nicht sichtbar oder in einer minderen Qualität sichtbar sein sowie die Struktur und Abstimmung zueinander verlieren können.

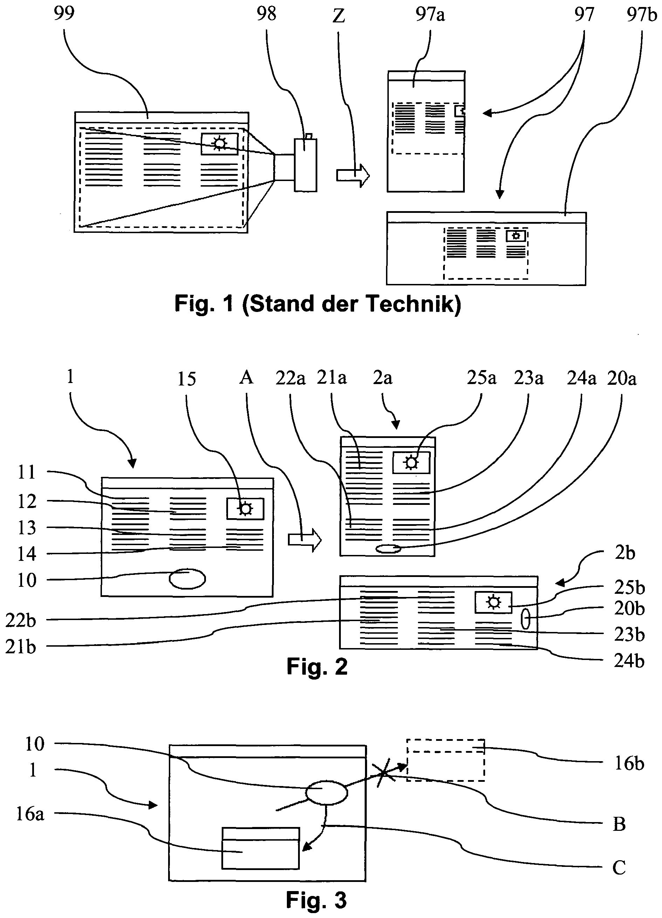

In **Fig. 1** ist diesbezüglich exemplarisch aufgezeigt, wir der Inhalt eines Browser-Fensters 99 eines Browser-Programms von einer Rasterbilderzeugungsmodul 98 einer Fernbedienungssoftware fotografisch festgehalten wird und dann, wie mit Pfeil Z angedeutet, als Rasterbild auf den Kontrollcomputer übertragen wird. Auf dem Kontrollcomputer wird dann das Rasterbild beispielsweise in einem Fenster 97 dargestellt. Dabei ist die Auflösung beziehungsweise die Grösse des Browser-Fensters 99 im Vergleich zur Auflösung beziehungsweise zur Grösse des Fensters 97 massgebend für die Qualität der Darstellung und Bedienbarkeit auf dem Kontrollcomputer. Beispielsweise ist im Fenster 97a auf Grund einer anderen Auflösung beziehungsweise Grösse das Rasterbild des Browser-Fensters 99 nicht vollständig abbildbar, so dass ein Teil dieses Rasterbilds nicht direkt sichtbar und zugänglich ist. In Fenster 97b ist als ein anderes Beispiel gezeigt, dass das Rasterbild verkleinert wird um in das Fenster 97b eingepasst werden zu können. Beide Beispiele, wie auch viele andere entsprechende Szenarien bei unterschiedlicher Auflösungen und/oder Grösse des Browser-Fensters auf dem Computer und des Fensters auf dem Kontrollcomputer, erschweren die Fernbedienung des auf dem Computer ausgeführten Browser-Programms auf dem Kontrollcomputer erheblich.

Aufgabe der nachfolgenden Erfindung ist es daher, ein Verfahren zur Fernbedienung eines Browser-Programms vorzuschlagen, mit dem das auf einem Computer ausgeführte Browser-Programm auf einem Kontrollcomputer verbessert darstellbar ist und einfacher bedienbar ist. Zudem ist es Aufgabe der nachfolgenden Erfindung, dass für die Fernbedienung des Browser-Programms keine Installation eines Drittprogramms auf dem Computer benötigt wird und dass eine unterbuchsfreie Fernsteuerung des Browser-Programms möglich ist.

### Darstellung der Erfindung

Die Aufgabe wird erfindungsgemäss durch ein Verfahren gelöst, wie es durch die Merkmale der unabhängigen Patentansprüche charakterisiert ist. Vorteilhafte Ausgestaltungen des erfindungsgemässen Verfahrens ergeben sich aus den Merkmalen der abhängigen Patentansprüche.

Das Wesen der Erfindung besteht im Folgenden: In einem Verfahren zur Fernbedienung eines auf einem Quellcomputer ausgeführten Browser-Programms von einem Zielcomputer aus, wobei das Browser-Programm ein Browser-Fenster erzeugt, in dem unter Einbezug der Ausgestaltung des Browser-Fensters Objekte strukturiert aufeinander abgestimmt dargestellt werden, werden die im Browser-Fenster dargestellten Objekte simultan auf den Zielcomputer übertragen und auf dem Zielcomputer dargestellt. Die Objekte oder Eigenschaften davon werden dabei einzeln auf den Zielcomputer übertragen und mittels eines auf dem Zielcomputer ausgeführten zweiten Browser-Programms auf dem Zielcomputer dargestellt, wobei das zweite Browser-Programm ein zweites Browser-Fenster erzeugt, in dem unter Einbezug der Ausgestaltung des zweiten Browser-Fensters die Objekte strukturiert aufeinander abgestimmt dargestellt werden. Indem die Objekte oder deren Eigenschaften, die beispielsweise mittels einer Auszeichnungssprache und/oder einer Skriptsprache wie beispielsweise der Hypertext Markup Language (HTML) beziehungsweise JavaScript definiert sind, simultan einzeln auf den Zielcomputer übertragen werden und da vom zweiten Browser-Programm dargestellt werden, kann gewährleistet werden, dass die Objekte sowohl auf dem Quellcomputer als auch auf dem Zielcomputer strukturiert aufeinander abgestimmt dargestellt werden und somit effizient bedienbar sind. Die "einzelne Übertragung" der Objekte auf den Zielcomputer bezieht sich insbesondere auf eine Übertragung unabhängig von den Gegebenheiten auf dem Quellcomputer, wie beispielsweise der eingestellten Auflösung eines am Quellcomputer angeschlossenen Bildschirms oder der eingestellten Grösse des Browser-Fensters auf dem Quellcomputer. Weiter bezieht sich die "einzelne Übertragung" insbesondere auch auf eine Übertragung von Eigenschaften der Objekte, so dass erfindungsgemäss nicht zwingend ganze Objekte übertragen werden. Eine Abhängigkeit bezüglich der Darstellung der Objekte auf dem Quellcomputer und auf dem Zielcomputer, insbesondere in Bezug auf die Grösse und/oder Auflösung des Browser-Fensters, besteht somit nicht. Die Ausgestaltung des Browser-Fensters ist unter anderem durch seine Breite, seine Höhe, die Auflösung des Bildschirms und die voreingestellten Browserstandards, wie beispielsweise der Standardschriftart oder der Standardfarben, definiert.

Ausserdem kann mit dem erfindungsgemässen Verfahren auch gewährleistet werden, dass die Objekte auf dem Quellcomputer und auf dem Zielcomputer miteinander korrelieren, so dass jegliche für die Objekte relevanten Aktionen, wie beispielsweise eine Änderung einer Eigenschaft eines Objekts, im Browser-Programm des Quellcomputers auch auf dem Zielcomputer vollzogen werden können und somit das Browser-Programm des Quellcomputers einfach fernbedienbar ist.

Das erfindungsgemässe Verfahren ermöglicht und vereinfacht verschiedene Anwendungen der Fernbedienung von Browser-Programmen. Beispielsweise kann ein Betreiber einer Seite des World Wide Web Systems (WWW) einen Benutzer der Seite effektiv betreuen und/oder schulen, ohne dass er durch die Gegebenheiten des Computers des Benutzers, wie beispielsweise der eingestellten Auflösung eines Bildschirms des Benutzers oder der eingestellten Grösse des Browser-Fensters auf dem Bildschirm des Benutzers behindert oder eingeschränkt wird. Oder zur Auswertung und Verbesserung der Benutzerführung einer die Objekte umfassenden Seite können beispielsweise die Aktionen die ein Benutzer des Quellcomputers oder des Zielcomputers am Browser-Programm vollzieht, während die Seite vom Browser-Programm dargestellt wird, aufgezeichnet und gespeichert werden.

Vorzugsweise werden auch die im zweiten Browser-Fenster dargestellten Objekte mindestens teilweise einzeln simultan auf den Quellcomputer übertragen und mittels des auf dem Quellcomputer ausgeführten Browser-Programms unter Einbezug der Ausgestaltung des Browser-Fensters strukturiert aufeinander abgestimmt dargestellt. Mit einem solchen Verfahren kann das Browser-Programm auf dem Quellcomputer interaktiv fernbedient werden, indem die Objekt zusätzlich ebenfalls auf dem Zielcomputer bedient werden können, dabei simultan auf den Quellcomputer übertagen werden und auf dem Quellcomputer dargestellt werden. Ein solches Verfahren ist beispielsweise dazu geeignet den Benutzer eines auf dem Quellcomputer ausgeführten Browser-Programms entfernt zu unterstützen, indem vom Zielcomputer aus direkt das Browser-Programm des Quellcomputers bedient werden kann.

Das Browser-Programm und das zweite Browser-Programm umfassen jeweils eine Interpretationseinheit zur Auswertung einer Auszeichnungssprache und zur Ausführung von Skriptbefehlen. Die Fernbedienung des auf einem Quellcomputer ausgeführten Browser-Programms wird dabei vollständig mittels der Interpretationseinheit des Browser-Programms und der Interpretationseinheit des zweiten Browser-Programms ausgeführt. Damit ist eine Fernbedienung des Browser-Programms des Quellcomputers möglich ohne dass eine Installation im Betriebssystem des Quellcomputers nötig ist. Beispielsweise umfassen Browser-Programme für das WWW jeweils eine solche Interpretationseinheit, die HTML als Auszeichnungssprache auswerten kann und Skriptbefehle in der Skriptsprache JavaScript ausführen kann. Mit der Installation des Browser-Programms für das WWW im Betriebssystem des Quellcomputers beziehungsweise des zweiten Browser-Programms für das WWW im Betriebssystem des Zielcomputers sind typischerweise die Interpretationseinheiten jeweils zwingend mitinstalliert, mit welchen sich HTML und JavaScript umfassende Seiten ausführen lassen. Für die Zwecke der Fernbedienung des Browser-Programms ist folglich keine weitere Installation mehr notwendig, da die gesamte dazu notwendige Funktionalität als Skriptbefehle (JavaScript-Befehle) zusammen mit der Auszeichnungssprache (HTML) in der Seite auf den Quellcomputer übertragen wird.

Eine solche Ausgestaltung des Verfahrens mittels in der Interpretationseinheit des Browser-Programms des Quellcomputers und in der Interpretationseinheit des Browser-Programms des Zielcomputers ausgeführten Skriptbefehlen ermöglicht auch die Durchführung eines anderen gattungsgemässen Verfahrens zur Fernbedienung eines Browser-Programms. Dabei ist es nicht notwendig, dass die Objekte einzeln auf den Zielcomputer übertragen werden und mittels eines auf dem Zielcomputer ausgeführten zweiten Browser-Programms auf dem Zielcomputer dargestellt werden, wobei das zweite Browser-Programm ein zweites Browser-Fenster erzeugt, in dem unter Einbezug der Ausgestaltung des zweiten Browser-Fensters die Objekte strukturiert aufeinander abgestimmt dargestellt werden. Vielmehr kann auf diese Weise beispielsweise auch das oben beschriebene in Fig. 2 exemplarisch dargestellte Verfahren des Standes der Technik ausgeführt werden, ohne dass für die Zwecke der Fernbedienung des Browser-Programms eine weitere Installation zusätzlich zur Installation des Browser-Programms selbst notwendig ist.

Mittels des Browser-Programms wird eine Auszeichnungssprache umfassende Seite, die auf den Quellcomputer übertragen wird, dargestellt und ausgeführt, wobei der Seite vor dem Übertragen auf den Quellcomputer Skriptbefehle zur Fernbedienung des auf dem Quellcomputer ausgeführten Browser-Programms zugefügt werden. Beispielsweise kann dazu die Seite, die von einem Server-Dienst für das Browser-Programm des Quellcomputers bereitgestellt ist, vorgängig mit Skriptbefehlen, zum Beispiel in JavaScript, erweitert werden. Die Seite wird dann also zusammen mit der Funktionalität für die Fernbedienbarkeit auf den Quellcomputer übertragen.

Verschiedene Skriptbefehle, die zur Ausführung von Seiten verwendet werden, stellen Objekte ausserhalb des Browser-Fensters des Browser-Programms, in dem sie ausgeführt werden, dar. Diese Objekte sind dann nicht mehr durch Skriptbefehle der im Browser-Fenster des Browser-Programms dargestellten Seite selbst kontrollierbar und insbesondere fernbedienbar. Beispielsweise erzeugen gewisse JavaScript Befehle wie zum Beispiel unter anderem der Befehl alert() ein externes Dialogfenster, das nicht mittels JavaScript Befehle der Seite selbst kontrollierbar ist. Bei der Fernbedienung von Browser-Programmen führt das dazu, dass die Kontrolle über das Browser-Programm auf dem Quellcomputer verloren geht, sobald ein solches Dialogfenster geöffnet wird und sich der beispielsweise mit einer Maus gesteuerte Zeiger auf diesem Dialogfenster befindet. Um dies zu verhindern, wird beim erfindungsgemässen Verfahren ein betreffender Skriptbefehl zur Ausführung der Seite vor dem Übertragen der Seite auf den Quellcomputer durch einen Skriptbefehl zur Fernbedienung des auf dem Quellcomputer ausgeführten Browser-Programms ersetzt. Damit wird der Skriptbefehl zur Ausführung der Seite, wie beispielsweise alert(), so ersetzt, dass der Skriptbefehl zur Fernbedienung, wie beispielsweise alert_replaced(), die selbe Funktionalität im Browser-Fenster selbst übernimmt, wie der Skriptbefehl zur Ausführung der Seite.

Weiter umfassen eine Seite bildende Objekte teilweise auch eingebettete Objekte. Solche eingebettete Objekte werden zusammen mit der Seite an den Quellcomputer übertragen und von einem auf dem Quellcomputer ausgeführten Drittprogramm im Browser-Fenster des Browser-Programms ausgeführt. Die Drittprogramme selbst, im WWW werden beispielsweise die Java Runtime Engine (JRE) oder ActiveX Komponenten als Drittprogramme eingesetzt, sind im Betriebssystem des Quellcomputers installiert. Die eingebetteten Objekte, wie beispielsweise Java Applets, hingegen werden nicht im Betriebssystem des Quellcomputers installiert sondern vom Drittprogramm im Browser-Fenster des Browser-Programms ausgeführt. Solche im Browser-Fenster des Browser-Programms ausgeführte eingebettete Objekte sind jedoch ebenfalls nicht durch Skriptbefehle der im Browser-Fenster des Browser-Programms dargestellten Seite selbst kontrollierbar und insbesondere fernbedienbar. Bei der Fernbedienung von Browser-Programmen führt das dazu, dass die Kontrolle über das Browser-Programm auf dem Quellcomputer verloren geht, sobald ein solches eingebettetes Objekt im Browser-Fenster dargestellt wird und sich der beispielsweise mit einer Maus gesteuerte Zeiger auf diesem eingebetteten Objekt befindet. Um dies zu verhindern, wird beim erfindungsgemässen Verfahren vorzugsweise mittels des Browser-Programms und eines auf dem Quellcomputer ausgeführten Drittprogramms eine ein eingebettetes Objekt umfassende Seite, die auf den Quellcomputer übertragen ist, im Browser-Fenster dargestellt und ausgeführt, wobei das eingebettete Objekte vom Drittprogramm dargestellt und ausgeführt wird, das eingebettete Objekt vor dem Übertragen auf den Quellcomputer erweitert, so dass es fernbedienbar ist. Damit ist die Seite als ganzes fernbedienbar auch wenn sie ein eingebettetes Objekt umfasst.

In einer weiteren vorteilhaften Ausführungsvariante des erfindungsgemässen Verfahrens wird mittels des Browser-Programms eine Auszeichnungssprache, Skriptbefehle zur Ausführung der Seite und Skriptbefehle zur Fernbedienung des auf dem Quellcomputer ausgeführten Browser-Programms umfassende Serverseite auf dem Quellcomputer dargestellt und ausgeführt und eine Auszeichnungssprache und Skriptbefehle zur Fernbedienung des auf dem Quellcomputer ausgeführten Browser-Programms umfassende Clientseite auf den Zielcomputer übertragen und auf dem Zielcomputer dargestellt und ausgeführt. Eine solche Ausgestaltung des Verfahrens ermöglicht beispielsweise, dass ein Betreiber einer die Objekte und weitere Objekte umfassende Seite selbst den Quellcomputer als Server-Computer betreibt. Die weiteren Objekte können beispielsweise Skriptprogramme mit Anwendungslogik umfassen, die für ein sauberes Ablaufen verhältnismässig hohe Anforderungen an den Quellcomputer stellen, oder Objekte, die aus technischen Gründen oder aus Sicherheitsgründen nicht auf den Zielcomputer übertragbar sind. Auf dem Zielcomputer werden dann die Objekte dargestellt, jedoch werden die daran vollzogenen Aktionen auf dem Quellcomputer ausgeführt. Ein solches serverseitiges Browser-System ermöglicht es, das Browser-Programm des Zielcomputers und Zielcomputers verhältnismässig leistungsarm auszugestalten und dennoch eine hohe Funktionalität der Seite zu gewährleisten. Beispielsweise ist es mit einem solchen serverseitigen Browser-System möglich, verhältnismässig leistungsarme Geräte, wie zum Beispiel ein Mobiltelefon, als Zielcomputer zu verwenden und trotzdem die volle Funktionalität eines leistungsstärkeren Geräts bereitzustellen. Eine weitergehende Anwendung dieses serverseitigen Browser-Systems kann es sein, Benutzern von mehreren Zielcomputern die simultane Darstellung und simultane Bearbeitung der Seite auf dem Quellcomputer zu ermöglichen.

Dabei kann auch mittels des zweiten Browser-Programms ein Objekt der Clientseite auf dem Zielcomputer geändert werden, das geänderte Objekt auf den Quellcomputer übertragen und mittels des Quellcomputers gespeichert. Damit lässt sich die Serverseite von einem Benutzer des Zielcomputers anpassen und speichern, so dass sie ihm oder auch Benutzern von anderen Zielcomputern wieder zur Verfügung stehen kann.

Ein weiterer Aspekt der Erfindung betrifft ein Computerprogramm, das eine Seite, die mittels einer Auszeichnungssprache definierte Objekte umfasst, um Skriptbefehle zur Fernbedienung eines auf einem Quellcomputer ausgeführten Browser-Programms erweitert, so dass mit der erweiterten Seite das oben beschriebene Verfahren ausführbar ist. Mit einem solchen Computerprogramme können herkömmliche Seiten automatisiert fernbedienbar gemacht werden, ohne dass ursprünglich bei der Gestaltung der Seite berücksichtigt werden muss, dass sie im Betrieb fernbedienbar sein soll.

Ein anderer weiterer Aspekt der Erfindung betrifft eine Kommunikationsvorrichtung, die einen Aufbereitungsdienst und einen Serverdienst umfasst, von dem aus eine Seite, die mittels einer Auszeichnungssprache definierte Objekte aufweist, auf einen Quellcomputer übertragbar ist. Dabei erweitert der Aufbereitungsdienst die Seite vor der Übertragung auf den Quellcomputer um Skriptbefehle zur Fernbedienung eines auf dem Quellcomputer ausgeführten Browser-Programms, so dass mit der erweiterten Seite das oben beschriebene Verfahren ausführbar ist. Der Server-Dienst kann dabei beispielsweise auf einem Server-Computer ausgeführt sein, der die Seite über das Internet bereitstellt. Der Aufbereitungsdienst kann entweder auf dem gleichen Server-Computer oder auf einem zweiten Server-Computer ausgeführt sein. Im Betrieb wird der Server-Dienst vom Browser-Programm des Quellcomputers kontaktiert und der Server-Dienst übermittelt dann die Seite an den Quellcomputer. Dabei wird die übermittelte Seite vom Aufbereitungsdienst so angepasst, dass sie die Funktionalität in Form von Skriptbefehlen umfasst, damit das Browser-Programm des Quellcomputers fernbedienbar ist, während die Seite im Browser-Fenster des Browser-Programms des Zielcomputers dargestellt und bedient wird. Der Aufbereitungsdienst umfasst vorzugsweise das oben beschriebene Computerprogramm. Mit einem solchen Aufbereitungsdienst kann gewährleistet werden, dass die Seite einfach aufgesetzt und gewartet werden kann ohne die Fernbedienbarkeit des Browser-Programms zu berücksichtigen und dass trotzdem automatisch die Seite immer während seiner Übermittlung so angepasst wird, dass das Browser-Programm des Quellcomputers fernbedienbar ist.

### Kurze Beschreibung der Zeichnungen

Im Folgenden wird das erfindungsgemässe Verfahren, das erfindungsgemässe Computerprogramm und die erfindungsgemässe Kommunikationsvorrichtung unter Bezugnahme auf die beigefügten Zeichnungen anhand von Ausführungsbeispielen detaillierter beschrieben. Zu diesen detaillierter beschriebenen Ausführungsbeispielen sind weitere Variationen realisierbar. Es zeigen:
Fig. 1 ein Funktionsschema eines Ausführungsbeispiels eines bekannten Verfahrens zur Fernbedienung eines auf einem Quellcomputer ausgeführten Browser-Programms von einem Zielcomputer aus (Stand der Technik);
Fig. 2 ein Funktionsschema eines ersten Ausführungsbeispiels des erfindungsgemässen Verfahrens;
Fig. 3 ein Funktionsschema des Verfahrens von Fig. 2 während eines Ersetzens eines Skriptbefehls zur Ausführung einer Seite vor dem Übertragen der Seite auf einen Quellcomputer;
Fig. 4 ein Funktionsschema des Verfahrens von Fig. 2 während einer Kontrolle eines eingebetteten Objektes der Seite;
Fig. 5 ein Funktionsschema eines Ausführungsbeispiels einer technischen Umsetzung des Verfahrens von Fig. 2 während einem Übermitteln einer Seite von einem Server-Computer in das Browser-Programm des Quellcomputers;
Fig. 6 ein Funktionsschema der technischen Umsetzung von Fig. 4 während einer Interaktion des Browser-Programms des Quellcomputers mit dem Browser-Programm des Zielcomputers;
Fig. 7 ein Funktionsschema eines zweiten Ausführungsbeispiels des erfindungsgemässen Verfahrens; und
Fig. 8 ein Funktionsschema eines dritten Ausführungsbeispiels des erfindungsgemässen Verfahrens.

### Weg(e) zur Ausführung der Erfindung

In **Fig. 2** ist ein erstes Ausführungsbeispiels des erfindungsgemässen Verfahrens für das World Wide Web System (WWW) gezeigt. Dabei wird auf einem Quellcomputer ein Browser-Programm ausgeführt, das auf einem Bildschirm ein Browser-Fenster 1 zur Darstellung von einer über das Internet bezogenen Seite erzeugt. Die Seite weist eine Mehrzahl von mittels einer Auszeichnungssprache (HTML) und mittels Skriptbefehlen (JavaScript) definierte Benutzerschnittstellenobjekte auf, die einen ersten Textblock 11, einen zweiten Textblock 12, einen dritten Textblock 13, einen vierten Textblock 14 sowie eine Grafik 15 umfassen. Die Benutzerschnittstellenobjekte werden unter Einbezug der Ausgestaltung des Browser-Fensters 1 strukturiert aufeinander abgestimmt im Browser-Fenster 1 in drei Spalten dargestellt, wobei der erste Textblock 11 in einer ersten Spalte, der zweite Textblock 12 und der dritte Textblock 13 in einer zweiten Spalte und die Grafik 15 und der vierte Textblock 14 in einer dritten Spalte dargestellt werden.

Weiter umfasst die im Browser-Fenster 1 dargestellte Seite ein Fernbedienungsobjekt 10, das JavaScript-Befehle zur Fernbedienung des auf dem Quellcomputer ausgeführten Browser-Programms aufweist. Das Fernbedienungsobjekt 10 wird im Browser-Fenster nicht sichtbar dargestellt und seine JavaScript-Befehle sind über eine standardisierten Interpretationseinheit des Browser-Programms ausführbar. Mittels des Fernbedienungsobjekts 10 werden die Benutzerschnittstellenobjekte einerseits wie mit Pfeil A angedeutet auf einen Zielcomputer übertragen und andererseits über diese kontrollierbar und fernbedienbar. Auf dem Zielcomputer wird ein zweites Browser-Programm ausgeführt, das eine der Seite entsprechende zweite Seite über ein zweites Browser-Fenster 2a bzw. 2b auf einem Bildschirm darstellt. Die zweite Seite umfasst mittels HTML und mittels JavaScript-Befehlen definierte Benutzerschnittstellenobjekte, die je nach Ausgestaltung des zweiten Browser-Fensters 2a bzw. 2b dargestellt werden.

Zum Beispiel weist das Browser-Fenster 2a eine verhältnismässig grosse Höhe und eine verhältnismässig kleine Breite auf. Entsprechend werden die Benutzerschnittstellenobjekte der zweiten Seite, die einen ersten Textblock 21 a, einen zweiten Textblock 22a, einen dritten Textblock 23a, einen vierten Textblock 24a sowie eine Grafik 25a umfassen, vom zweiten Browser-Programm im zweiten Browser-Fenster strukturiert aufeinander abgestimmt dargestellt. Bei der beispielhaft in Fig. 2 gezeigten Ausgestaltung des zweiten Browser-Fensters 2a werden die Benutzerschnittstellenobjekte in zwei Spalten gegliedert, wobei der erste Textblock 21 a und der zweite Textblock 22a in einer ersten Spalte und die Grafik 25a, der dritte Textblock 23a und der vierte Textblock 24a in einer zweiten Spalte dargestellt werden.

In einem anderen in Fig. 2 gezeigten Beispiel weist das Browser-Fenster 2b eine verhältnismässig kleine Höhe und eine verhältnismässig grosse Breite auf. Entsprechend werden die Benutzerschnittstellenobjekte der zweiten Seite, die einen ersten Textblock 21 b, einen zweiten Textblock 22b, einen dritten Textblock 23b, einen vierten Textblock 24b sowie eine Grafik 25b umfassen, vom zweiten Browser-Programm im zweiten Browser-Fenster strukturiert aufeinander abgestimmt in drei Spalten dargestellt. Dabei wird der erste Textblock 21 b in einer ersten Spalte, der zweite Textblock 22b und der dritte Textblock 23b in einer zweiten Spalte und die Grafik 25b und der vierte Textblock 24b in einer dritten Spalte dargestellt.

Weiter umfasst die im zweiten Browser-Fenster 2a beziehungsweise 2b dargestellte zweite Seite ein Fernbedienungsobjekt 20a beziehungsweise 20b, das nicht im Browser-Fenster 2a beziehungsweise 2b sichtbar dargestellt wird und das JavaScript-Befehle zur Fernbedienung des auf dem Quellcomputer ausgeführten Browser-Programms aufweist. Bei der Fernbedienung werden die Benutzerschnittstellenobjekte des Browser-Fensters 1 des Quellcomputers mittels in JavaScript standardmässig enthaltenen Ereignissteuerungsfunktionen (event handler) überwacht und bei einem eintretenden Ereignis wird eine entsprechende Aktion im zweiten Browser-Fenster 2a beziehungsweise 2b auf dem Zielcomputer ausgelöst. Beispielsweise werden Bewegungen eines normalerweise mit einer Maus betätigten Zeigers auf einem Benutzerschnittstellenobjekt, zum Beispiel auf dem Textblock 11, mittels der Ereignissteuerungsfunktionen erfasst, auf den Zielcomputer übertragen und auf dem entsprechenden Benutzerschnittstellenobjekt, zum Beispiel dem Textblock 21 a beziehungsweise 21 b, im zweiten Browser-Fenster 2a beziehungsweise 2b dargestellt. Die so übertragenen und Aktionen auslösenden Ereignisse umfassen alle die Benutzerschnittstellenobjekte betreffenden Ereignisse, wie unter anderem Zeigerbewegungen, Mausklicks und Eingaben in Formularfelder.

Analog dazu werden auch die Benutzerschnittstellenobjekte des zweiten Browser-Fensters 2a beziehungsweise 2b des Zielcomputers mittels in JavaScript standardmässig enthaltenen Ereignissteuerungsfunktionen überwacht und bei einem eintretenden Ereignis wird eine entsprechende Aktion im Browser-Fenster 1 auf dem Quellcomputer ausgelöst. Auf diese Weise kann das Browser-Programm des Quellcomputers vom Zielcomputer aus fernbedient werden, während eine Seite im Browser-Fenster 1 des Quellcomputers dargestellt wird. Es wird eine Korrelation zwischen den einzelnen Benutzerschnittstellenobjekten des Quellcomputers und den Benutzerschnittstellenobjekten des Zielcomputers erzeugt, mittels derer das Browser-Programm 1 des Quellcomputers komfortabel unabhängig von der Ausgestaltung des Browser-Fensters 2a beziehungsweise 2b des Zielcomputers vom Zielcomputer aus fernbedienbar ist.

Für die gesamte weitere Beschreibung gilt folgende Festlegung. Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden Figurenbeschreibungen Bezug genommen.

Wie in der **Fig. 3** dargestellt wird beim ersten Ausführungsbeispiel des erfindungsgemässen Verfahrens ermöglicht, dass die Fernbedienbarkeit des Browser-Programms des Quellcomputers bestehen bleibt, auch wenn darin ein JavaScript-Befehl zur Ausführung der Seite ausgeführt wird, der ein ausserhalb des Browser-Fensters 1 dargestelltes Objekt erzeugt. Dazu werden alle entsprechenden JavaScript-Befehle zur Ausführung der Seite durch angepasste JavaScript-Funktionen ersetzt, wobei die angepassten JavaScript-Funktionen die gleichen Funktionalitäten im Browser-Fenster 1 selbst erzeugen wie die JavaScript-Befehle ausserhalb des Browser-Fensters. Beispielsweise wird der JavaScript-Befehl zur Erzeugung eines Dialogfensters 16b ersetzt durch eine angepasste im Fernbedienungsobjekt 10 definierte JavaScript-Funktion. So wird, wie durch Pfeil B angedeutet, nicht das Standard-JavaScript-Dialogfenster ausserhalb des Browser-Fensters 1 erzeugt, sondern wie durch Pfeil C angedeutet das gleiche Dialogfenster im Browser-Fenster 10 selbst. Damit kann die Kontrolle über die Seite und so auch die Fernbedienbarkeit des Browser-Programms gewahrt werden.

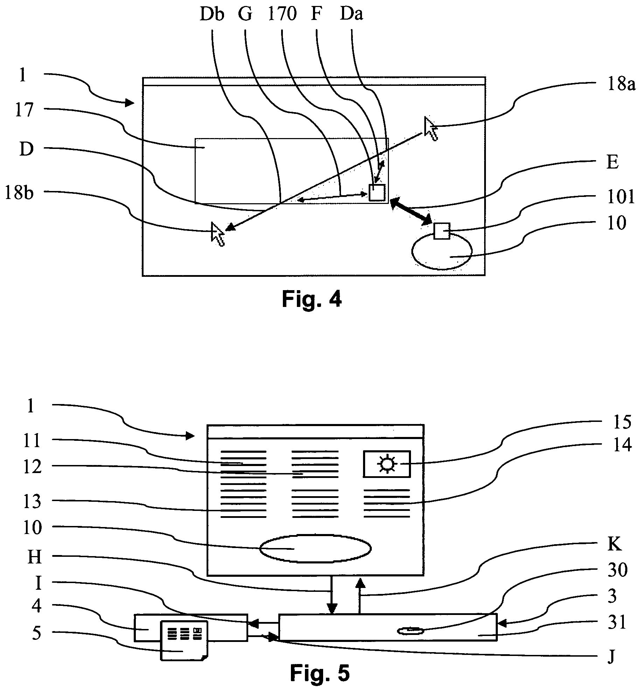

Wie in **Fig. 4** gezeigt, ist das Browser-Programm auch fernbedienbar, wenn die in seinem Browser-Fenster dargestellte Seite ein eingebettetes Objekt 17, wie beispielsweise ein Java-Applet, umfasst. Dieses wird mittels eines im Betriebssystem des Quellcomputers installierten Drittprogramms, wie beispielsweise der Java Runtime Engine (JRE), im Browser-Fenster 1 des Quellcomputers ausgeführt. Dazu wird einerseits dem eingebetteten Objekt 17 vor der Übertragung der Seite auf den Quellcomputer ein zusätzliches Fernbedienungsobjekt 170 als Programmteil zugefügt. Andererseits weist das Fernbedienungsobjekt 10 der Seite ein Unterobjekt 101 auf, das Skriptbefehle zur Interaktion und Auswertung des zusätzlichen Fernbedienungsobjekts 170 aufweist. Wird beispielsweise der Zeiger 18a auf dem Bildschirm des Quellcomputers, wie durch Pfeil D angedeutet, über das eingebettete Objekt 17 hinwegbewegt, so interagiert das zusätzliche Fernbedienungsobjekt 170, wie durch den Pfeil E angedeutet, mit dem Unterobjekt 101 sobald sich der Zeiger 18a, wie durch Punkt Da und Pfeil F angedeutet, über dem eingebetteten Objekt 17 befindet. Dabei übermittelt es dem Unterobjekt 101 die zur Fernbedienung notwendigen Informationen. Das zusätzliche Fernbedienungsobjekt 170 verliert die Kontrolle über den Zeiger 18b sobald er sich, wie durch Punkt Db und Pfeil G angedeutet, nicht mehr über dem eingebetteten Objekt 17 befindet.

Wie in **Fig. 5** gezeigt, kann das erfindungsgemässe Verfahren mit einer Kommunikationsvorrichtung technisch umgesetzt werden, die einen Aufbereitungsdienst 3 und einen als Web-Server 4 ausgestalteten Serverdienst umfasst. Der Aufbereitungsdienst 3 und der Web-Server 4 können auf dem gleichen Servercomputer oder auch auf getrennten Servercomputern ausgeführt sein. Auf dem Web-Server 4 ist eine ursprüngliche Seite 5 auf bekannte Weise für den Zugriff über das Internet von einem Betreiber bereitgestellt. Eine Anfrage des Browser-Programms des Quellcomputers ergeht, wie durch Pfeil H angedeutet, über eine Schnittstelle 31 des Aufbereitungsdiensts 3 und wird von diesem, wie durch den Pfeil I angedeutet, an den Web-Server 4 weitergeleitet. Der Web-Server 4 überträgt, wie durch Pfeil J angedeutet, die ursprüngliche Seite 5 an die Schnittstelle 31, von welcher der ursprünglichen Seite 5 ein Femsteuerungsobjekt 30 zugefügt wird. Die daraus resultierende Seite wird, wie durch Pfeil K angedeutet an das Browser-Programm übertragen, von welchem die Benutzerschnittstellenobjekte der Seite wie oben beschrieben dargestellt werden.

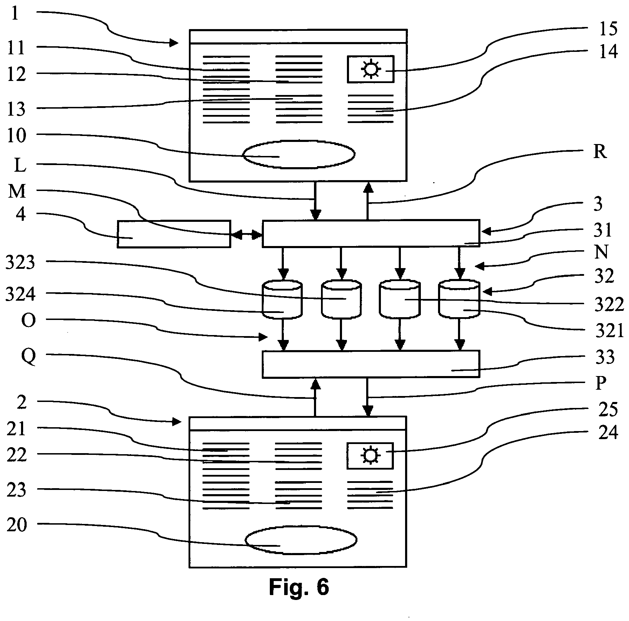

Wie in **Fig. 6** gezeigt, umfasst die Kommunikationseinrichtung weiter eine zweite Schnittstelle 33 und mehrere Datenbanken 32, die eine Aktionendatenbank 321, eine Inhaltsdatenbank 322, eine Dateiendatenbank 323 und eine Benutzerdatenbank 324 umfassen. Nach der wie oben beschriebenen Übertragung und Aufbereitung der ursprünglichen Seite 5 zur im Browser-Programm des Quellcomputers dargestellten Seite, wird zur Fernbedienung die Seite wie oben beschrieben ebenfalls durch das zweite Browser-Programm in einem Browser-Fenster 2 des Zielcomputers dargestellt. Dabei werden sowohl die Benutzerschnittstellenobjekte, das heisst der erste Textblock 21, der zweite Textblock 22, der dritte Textblock 23, der vierte Textblock 24 und die Grafik 25, im zweiten Browser-Fenster 2 dargestellt, als auch das zweite Fernbedienungsobjekt 20 im zweiten Browser-Programm bereitgestellt. Bei der Fernbedienung werden die oben beschriebenen Ereignisse, wie durch Pfeil L angedeutet, an die Schnittstelle 31 übertragen, wobei, wie durch Pfeil M angedeutet, zu Aktualisierungszwecken auf dem Web-Server 4 jeweils überprüft werden kann, ob die im Browser-Fenster 1 dargestellte Seite angepasst werden soll. Wie durch die Pfeile N angedeutet, werden alle zu einem der Ereignisse gehörenden Informationen jeweils in der dafür vorgeshenen Datenbank 32 gespeichert. Wie durch die Pfeile O angedeutet, werden dann diese Objekte von der zweiten Schnittstelle 33 so aufbereitet, dass, wie durch Pfeil P angedeutet, eine dem Ereignis entsprechende Aktion im zweiten Browser-Fenster 2 des Zielcomputers ausgeführt wird. Die gleiche Art der Ereignisübertragung kann, wie durch Pfeil Q angedeutet, auch in die entgegengesetzte Richtung vom Zielcomputer auf den Quellcomputer stattfinden. Mittels der Datenbanken 32 lassen sich alle auf der im Browser-Fenster 1 des Quellcomputers dargestellten Seite und auf der im Browser-Fenster 2 des Zielcomputers dargestellten zweiten Seite vorkommenden Ereignisse speichern und auch reproduzieren.

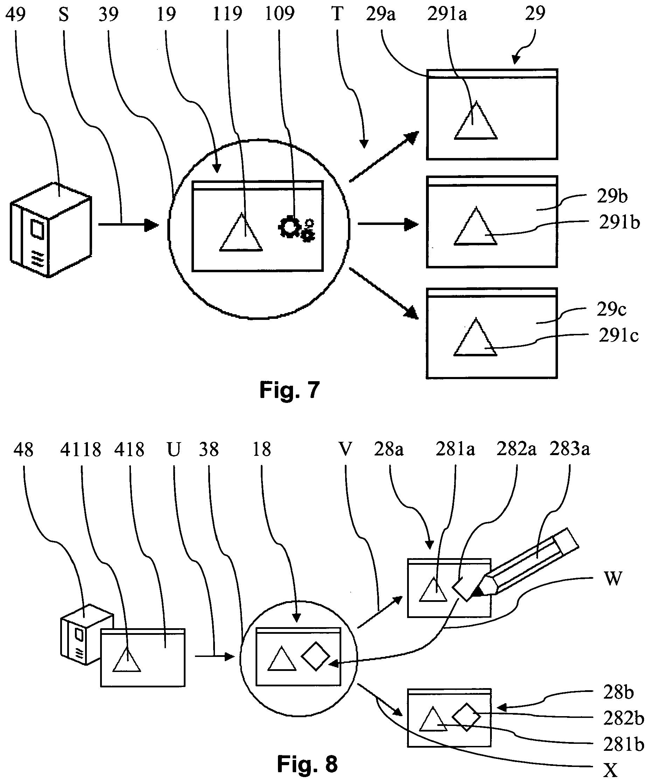

Im in der **Fig. 7** gezeigten Ausführungsbeispiel des erfindungsgemässen Verfahrens wird beim Aufrufen einer Seite auf einem Server 49, die Seite, wie durch Pfeil S angedeutet, von einem Aufbereitungsdienst 39 mittels eines auf einem Server-Computer als Quellcomputer ausgeführten Browser-Programms in einem Browser-Fenster 19 als Serverseite dargestellt. Die Seite umfasst dabei neben Objekten 119, die Benutzerschnittstellenobjekte und ein Fernbedienungsobjekt aufweisen, ein Logikobjekt 109, das JavaScript-Befehle zur Ausführung der Seite umfasst. Wie durch die Pfeile T angedeutet, wird dann die Seite in mehreren Browser-Fenstern 29 von Browser-Programmen von Zielcomputern dargestellt, wobei jeweils nur die Objekte 291 a beziehungsweise 291b beziehungsweise 291c zu den Browser-Programmen übertragen und im zugehörigen Browser-Fenster 29a beziehungsweise 29b beziehungsweise 29c dargestellt werden. Mit diesem Ausführungsbeispiel des erfindungsgemässen Verfahrens kann die ganze im Logikobjekt definierte Programmlogik, die allenfalls erhebliche Ressourcen beanspruchen kann, auf dem Server ausgeführt werden. An die Leistungsfähigkeit der Zielcomputer werden entsprechend reduzierte Anforderungen gestellt.

In der **Fig. 8** ist ein Ausführungsbeispiel des erfindungsgemässen Verfahrens gezeigt, bei dem von einem Server 48 eine ursprüngliche Seite 418 bereitgestellt wird. Die ursprüngliche Seite 418 umfasst Objekte 4118, die Benutzerschnittstellenobjekte aufweisen. Wie durch Pfeil U angedeutet, wird auf eine entsprechende Anfrage von einem Browser-Programm eines Zielcomputers die Seite an einen Aufbereitungsdienst 38 übertragen und von diesem mittels eines auf einem Server-Computer als Quellcomputer ausgeführten Browser-Programms als Serverseite in einem Browser-Fenster 18 dargestellt und aufbereitet. Die aufbereitete Seite wird, wie durch Pfeil V angedeutet an ein erstes Browser-Programm übertragen, das die Objekte 281 a in einem Browser-Fenster 28a als Clientseite auf einem Zielcomputer darstellt. Mittels einem Anpassungsinstrument 283a wird der Seite auf dem Zielcomputer ein weiteres Objekt 282a zugefügt und danach, wie durch Pfeil W angedeutet, an den Aufbereitungsdienst 38 zurück übertragen. An ein danach über den Aufbereitungsdienst nach der Seite anfragendes Browser-Programm eines weiteren Zielcomputers wird, wie durch Pfeil X angedeutet, die Seite zusammen mit dem weiteren Objekt übertragen. Das Browser-Programm des weiteren Zielcomputers stellt dann die Seite sowohl mit den Objekten 281 b als auch mit dem weiteren Objekt 282b als Clientseite in einem Browser-Fenster 28b dar.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang und den Geist der folgenden Ansprüche zu verlassen. Insbesondere umfasst die Erfindung ebenfalls Ausführungsformen mit jeglicher Kombination von Merkmalen, die vorstehend oder nachfolgend zu verschiedenen Ausführungsformen genannt oder gezeigt sind.

Die Erfindung umfasst ebenfalls einzelne Merkmale in den Figuren auch wenn sie dort im Zusammenhang mit anderen Merkmalen gezeigt sind und/oder vorstehend oder nachfolgend nicht genannt sind.

Im Weiteren schließt der Ausdruck "umfassen" und Ableitungen davon andere Elemente oder Schritte nicht aus. Ebenfalls schließt der unbestimmte Artikel "ein" bzw. "eine" und Ableitungen davon eine Vielzahl nicht aus. Die Funktionen mehrerer in den Ansprüchen aufgeführter Merkmale können durch eine Einheit erfüllt sein. Ein Computerprogramm kann auf einem geeigneten Medium gespeichert sein und/oder vertrieben werden, wie beispielsweise auf einem optischen Speichermedium oder einem Festmedium, das zusammen mit oder als Teil von anderer Hardware bereitgestellt wird. Es kann auch in anderer Form vertrieben werden, wie beispielsweise über das Internet oder andere verkabelte oder unverkabelte Telekommunikationssysteme. Alle Bezugszeichen in den Ansprüchen sind nicht als den Umfang der Ansprüche einschränkend zu verstehen.

## Patentansprüche

1. Verfahren zur Fernbedienung eines auf einem Quellcomputer ausgeführten Browser-Programms von einem Zielcomputer aus, wobei das Browser-Programm ein Browser-Fenster (1 ; 18; 19) erzeugt, in dem unter Einbezug der Ausgestaltung des Browser-Fensters (1 ; 18; 19) Objekte (11 , 12, 13, 14, 15; 119) strukturiert aufeinander abgestimmt dargestellt werden, bei dem die im Browser-Fenster (1 ; 18; 19) dargestellten Objekte (11 , 12, 13, 14, 15; 119) simultan auf den Zielcomputer übertragen werden und auf dem Zielcomputer dargestellt werden, wobei
die Objekte (11, 12, 13, 14, 15; 119) einzeln auf den Zielcomputer übertragen werden und mittels eines auf dem Zielcomputer ausgeführten zweiten Browser-Programms auf dem Zielcomputer dargestellt werden,
das zweite Browser-Programm ein zweites Browser-Fenster (2, 2a, 2b; 29, 29a, 29b, 29c; 28a, 28b) erzeugt, in dem unter Einbezug der Ausgestaltung des zweiten Browser-Fensters (2, 2a, 2b; 29, 29a, 29b, 29c; 28a, 28b) die Objekte (21, 22, 23, 24, 25, 21a, 22a, 23a, 24a, 25a, 21 b, 22b, 23b, 24b, 25b; 281a, 282a, 281 b, 282b; 291a, 291 b, 291c) strukturiert aufeinander abgestimmt dargestellt werden,
wobei das Browser-Programm und das zweite Browser-Programm jeweils eine Interpretationseinheit zur Auswertung einer Auszeichnungssprache und zur Ausführung von Skriptbefehlen umfassen,
mittels des Browser-Programms eine Auszeichnungssprache umfassende Seite, die auf den Quellcomputer übertragen wird, dargestellt und ausgeführt wird, und
die Seite Skriptbefehle zur Ausführung der Seite umfasst,
**dadurch gekennzeichnet, dass**
der Seite vor dem Übertragen auf den Quellcomputer Skriptbefehle zur Fernbedienung (10, 20, 20a, 20b, 30) des auf dem Quellcomputer ausgeführten Browser-Programms zugefügt werden,
die Fernbedienung des auf dem Quellcomputer ausgeführten Browser-Programms vollständig mittels der Interpretationseinheit des Browser-Programms und der Interpretationseinheit des zweiten Browser-Programms ausgeführt wird, und
einer der Skriptbefehle zur Ausführung der Seite, der ein Objekt ausserhalb des Browser-Fensters (1 ; 18; 19) des Browser-Programms darstellt, vor dem Übertragen auf den Quellcomputer durch einen Skriptbefehl zur Fernbedienung des auf dem Quellcomputer ausgeführten Browser-Programms so ersetzt wird, dass dieser Skriptbefehl zur Fernbedienung des auf dem Quellcomputer ausgeführten Browser-Programms die selbe Funktionalität im Browser-Fensters (1 ; 18; 19) selbst übernimmt wie der ersetzte Skriptbefehl zur Ausführung der Seite.

2. Verfahren nach Anspruch 1 , bei welchem die im zweiten Browser-Fenster (2, 2a, 2b; 29, 29a, 29b, 29c; 28a, 28b) dargestellten Objekte (21 , 22, 23, 24, 25, 21a, 22a, 23a, 24a, 25a, 21b, 22b, 23b, 24b, 25b; 281a, 282a, 281 b, 282b; 291a, 291 b, 291c) mindestens teilweise einzeln simultan auf den Quellcomputer übertragen werden und mittels des auf dem Quellcomputer ausgeführten Browser-Programms unter Einbezug der Ausgestaltung des Browser-Fensters (1 ; 18; 19) strukturiert aufeinander abgestimmt dargestellt werden.

3. Verfahren nach Anspruch 1 oder 2, bei dem mittels des Browser-Programms und eines auf dem Quellcomputer ausgeführten Drittprogramms eine ein eingebettetes Objekt (17) umfassende Seite, die auf den Quellcomputer übertragen ist, im Browser-Fenster (1 ; 18; 19) dargestellt und ausgeführt wird, wobei das eingebettete Objekte (17) vom Drittprogramm dargestellt und ausgeführt wird und wobei das eingebettete Objekt (17) vor dem Übertragen auf den Quellcomputer erweitert wird, so dass es fernbedienbar ist.

4. Verfahren nach einem der vorangehenden Ansprüche, bei dem mittels des Browser-Programms eine Auszeichnungssprache, Skriptbefehle zur Ausführung der Seite (109) und Skriptbefehle zur Fernbedienung (10, 20, 20a, 20b, 30) des auf dem Quellcomputer ausgeführten Browser-Programms umfassende Serverseite auf dem Quellcomputer dargestellt und ausgeführt wird und bei dem eine Auszeichnungssprache und Skriptbefehle zur Fernbedienung (10, 20, 20a, 20b, 30) des auf dem Quellcomputer ausgeführten Browser-Programms umfassende Clientseite auf den Zielcomputer übertragen und auf dem Zielcomputer dargestellt und ausgeführt wird.

5. Verfahren nach Anspruch 4, bei dem mittels des zweiten Browser-Programms ein Objekt (282a) der Clientseite auf dem Zielcomputer geändert wird, das geänderte Objekt auf den Quellcomputer übertragen wird und mittels dem Quellcomputer gespeichert wird.

6. Computerprogramm, das eine Seite (5), die mittels einer Auszeichnungssprache definierte Objekte umfasst, um Skriptbefehle zur Fernbedienung (30) eines auf einem Quellcomputer ausgeführten Browser-Programms erweitert, so dass mit der erweiterten Seite das Verfahren nach einem der Ansprüche 1 bis 5 ausführbar ist.

7. Kommunikationsvorrichtung, die einen Aufbereitungsdienst (3; 38; 39) und einen auf einem Server-Computer ausgeführten Serverdienst (4; 48; 49) umfasst, von dem aus eine Seite (5), die mittels einer Auszeichnungssprache definierte Objekte aufweist, auf einen Quellcomputer übertragbar ist, wobei der Aufbereitungsdienst (3; 38; 39) die Seite vor der Übertragung auf den Quellcomputer um Skriptbefehle zur Fernbedienung (30) eines auf dem Quellcomputer ausgeführten Browser-Programms erweitert, so dass mit der erweiterten Seite das Verfahren nach einem der Ansprüche 1 bis 5 ausführbar ist.

## Claims

1. A method for remote control of a browser program executed on a source computer by a target computer, wherein the browser program generates a browser window (1; 18; 19) in which objects (11, 12, 13, 14, 15; 119) are displayed in a structurally coordinated manner taking into account the configuration of the browser window (1; 18; 19), and the objects (11, 12, 13, 14, 15; 119) displayed in the browser window (1; 18; 19) are simultaneously transmitted to the target computer and displayed on the target computer, wherein,
the objects (11, 12, 13, 14, 15; 119) are individually transmitted to the target computer and are displayed on the target computer by means of a second browser program executed on the target computer,
the second browser program generates a second browser window (2, 2a, 2b; 29, 29a, 29b, 29c; 28a, 28b), in which the objects (21, 22, 23, 24, 25, 21 a, 22a, 23a, 24a, 25a, 21 b, 22b, 23b, 24b, 25b; 281 a, 282a, 281 b, 282b; 291 a, 291 b, 291 c) are displayed in a structurally coordinated manner taking into account the configuration of the second browser window (2, 2a, 2b; 29, 29a, 29b, 29c; 28a, 28b),
wherein the browser program and the second browser program each comprise an interpretation unit for evaluating a markup language and for executing script commands,
a page, comprising a markup language, is transmitted to the source computer, and is displayed and executed by means of the browser program, and
the page comprises script commands for executing the page,
**characterized in that**
script commands for remote control (10, 20, 20a, 20b, 30) of the browser program executed on the source computer are added to the page before transmission to the source computer,
the remote control of the browser program executed on the source computer is executed completely by means of the interpretation unit of the browser program and the interpretation unit of the second browser program, and
one of the script commands for executing the page, which displays an object outside of the browser window (1; 18; 19) of the browser program, is replaced by a script command for remote control of the browser program executed on the source computer before transmission to the source computer, such that this script command for remote control of the browser program executed on the source computer takes over the same functionality in the browser window (1; 18; 19) as the replaced script command for executing the page.

2. The method according to Claim 1, wherein the objects (21, 22, 23, 24, 25, 21 a, 22a, 23a, 24a, 25a, 21b, 22b, 23b, 24b, 25b; 281a, 282a, 281b, 282b; 291a, 291b, 291c) displayed in the second browser window (2, 2a, 2b; 29, 29a, 29b, 29c; 28a, 28b) are at least partially transmitted individually and simultaneously to the source computer and are displayed in a structurally coordinated manner taking into account the configuration of the browser window (1; 18; 19) by means of the browser program executed on the source computer.

3. The method according to Claim 1 or 2, wherein a page comprising an embedded object (17) is transmitted to the source computer, displayed and executed in the browser window (1; 18; 19) by means of the browser program and by means of a third program executed on the source computer, wherein the embedded object (17) is displayed and executed by the third program, and wherein the embedded object (17) is extended before transmission to the source computer so that it is remotely controllable.

4. The method according to any one of the preceding claims, wherein, by means of the browser program, a server page comprising markup language, script commands for executing the page (109) and script commands for remotely controlling (10, 20, 20a, 20b, 30) the browser program executed on the source computer, is displayed and executed on the source computer, and wherein a client page comprising markup language and script commands for remotely controlling (10, 20, 20a, 20b, 30) the browser program executed on the source computer is transmitted to the target computer and is displayed and executed on the target computer.

5. The method according to Claim 4, wherein, by means of the second browser program, an object (282a) of the client page is changed on the target computer, the changed object is transmitted to the source computer and is stored by means of the source computer.

6. A computer program, which extends a page (5), comprising objects defined by means of a markup language, by script commands for remotely controlling (30) a browser program executed on a source computer, so that the method according to one of claims 1 to 5 can be executed using the extended page.

7. A communication device, which comprises a processing service (3; 38; 39) and a server service (4; 48; 49) that is executed on a server computer, from which one page (5), which has objects defined by means of a markup language, is transmissible to a source computer, wherein the processing service (3; 38; 39) extends the page by script commands for remotely controlling (30) a browser program executed on the source computer before the transmission to the source computer, so that the method according to one of claims 1 to 5 can be executed using the extended page.

## Revendications

1. Procédé de commande à distance d'un programme de navigateur exécuté sur un ordinateur source depuis un ordinateur cible, dans lequel le programme de navigateur crée une fenêtre de navigateur (1 ; 18 ; 19), dans laquelle, en tenant compte de la configuration de la fenêtre de navigateur (1 ; 18 ; 19), des objets (11, 12, 13, 14, 15 ; 119) sont représentés de manière structurée et adaptée les uns au-dessus des autres, lequel les objets (11, 12, 13, 14, 15; 119) représentés dans la fenêtre de navigateur (1 ; 18; 19) peuvent être transmis simultanément sur l'ordinateur cible et représentés sur l'ordinateur cible, dans lequel
les objets (11, 12, 13, 14, 15 ; 119) sont transmis de manière individuelle sur l'ordinateur cible et représentés sur l'ordinateur cible au moyen d'un deuxième programme de navigateur exécuté sur l'ordinateur cible,
le deuxième programme de navigateur crée une deuxième fenêtre de navigateur (2, 2a, 2b ; 29, 29a, 29b, 29c ; 28a, 28b), dans laquelle, en tenant compte de la configuration de la deuxième fenêtre de navigateur (2, 2a, 2b ; 29, 29a, 29b, 29c ; 28a, 28b), les objets (21, 22, 23, 24, 25, 21a, 22a, 23a, 24a, 25a, 21b, 22b, 23b, 24b, 25b ; 281a, 282a, 281b, 282b; 291a, 291 b, 291 c) étant représentés de manière structurée et adaptée les uns au-dessus des autres,
dans lequel le programme de navigateur et le deuxième programme de navigateur comprennent chacun une unité d'interprétation afin d'évaluer un langage de balisage et de réaliser des commandes de script,
au moyen du programme de navigateur, une page contenant le langage de balisage, qui est transmise sur l'ordinateur source, est représentée et exécutée et
la page comprend des commandes de script pour l'exécution de la page,
**caractérisé en ce que**
la page est ajoutée avant la transmission sur l'ordinateur source de commandes de script pour la commande à distance (10, 20, 20a, 20b, 30) du programme de navigateur exécuté sur l'ordinateur source,
la commande à distance du programme de navigateur exécuté sur l'ordinateur source est entièrement exécutée au moyen de l'unité d'interprétation du programme de navigateur et de l'unité d'interprétation du deuxième programme de navigateur et
une des commandes de script pour l'exécution de la page, qui représente un objet en dehors de la fenêtre de navigateur (1 ; 18 ; 19) du programme de navigateur, est remplacée, avant la transmission sur l'ordinateur source, par une commande de script pour la commande à distance du programme de navigateur exécuté sur l'ordinateur source, de telle sorte que cette commande de script pour la commande à distance du programme de navigateur exécuté sur l'ordinateur source assume la même fonctionnalité dans la fenêtre de navigateur (1 ; 18 ; 19) que la commande de script remplacée pour l'exécution de la page.

2. Procédé selon la revendication 1, dans lequel les objets (21, 22, 23, 24, 25, 21 a, 22a, 23a, 24a, 25a, 21b, 22b, 23b, 24b, 25b; 281a, 282a, 281b, 282b; 291a, 291b, 291 c) représentés dans la deuxième fenêtre de navigateur (2, 2a, 2b ; 29, 29a, 29b, 29c ; 28a, 28b) sont transmis au moins partiellement de manière individuelle simultanément sur l'ordinateur source et représentés au moyen du programme de navigateur exécuté sur l'ordinateur source en tenant compte de la configuration de la fenêtre de navigateur (1 ; 18; 19) de manière structurée et adaptée les uns au-dessus des autres.

3. Procédé selon la revendication 1 ou 2, dans lequel, au moyen du programme de navigateur et d'un programme tiers exécuté sur l'ordinateur source, une page contenant un objet intégré (17), qui est transmise sur l'ordinateur source, est représentée et exécutée dans la fenêtre de navigateur (1 ; 18 ; 19), dans lequel l'objet intégré (17) est représenté et exécuté par le programme tiers et dans lequel l'objet intégré (17) est agrandi avant la transmission sur l'ordinateur source, de manière à pouvoir être commandé à distance.

4. Procédé selon l'une des revendications précédentes, dans lequel, au moyen du programme de navigateur, une page de serveur contenant un langage de balisage, des commandes de script pour l'exécution de la page (109) et des commandes de script pour la commande à distance (10, 20, 20a, 20b, 30) du programme de navigateur exécuté sur l'ordinateur source est représentée et exécutée sur l'ordinateur source et dans lequel une page client contenant un langage de balisage et des commandes de script pour la commande à distance (10, 20, 20a, 20b, 30) du programme de navigateur exécuté sur l'ordinateur source est transmise sur l'ordinateur cible et représentée et exécutée sur l'ordinateur cible.

5. Procédé selon la revendication 4, dans lequel, au moyen du deuxième programme de navigateur, un objet (282a) de la page client est modifié sur l'ordinateur cible, l'objet modifié étant transmis sur l'ordinateur source et sauvegardé au moyen de l'ordinateur source.

6. Programme informatique, qui agrandit une page (5), qui comprend des objets définis au moyen d'un langage de balisage, avec des commandes de script pour la commande à distance (30) d'un programme de navigateur exécuté sur un ordinateur source, de telle sorte que le procédé selon l'une des revendications 1 à 5 puisse être exécuté avec la page agrandie.

7. Dispositif de communication, qui comprend un service de traitement (3 ; 38 ; 39) et un service de serveur (4 ; 48 ; 49) exécuté sur un ordinateur serveur, depuis lequel une page (5), qui présente des objets définis au moyen d'un langage de balisage, peut être transmise sur un ordinateur source, le service de traitement (3 ; 38 ; 39) agrandissant la page avant la transmission sur l'ordinateur source avec des commandes de script pour la commande à distance (30) d'un programme de navigateur exécuté sur l'ordinateur source, de telle sorte que le procédé selon l'une des revendications 1 à 5 puisse être exécuté avec la page agrandie.
